# EUROPEAN PATENT APPLICATION

(11) **EP 4 509 652 A1**
(43) Date of publication of application: **19.02.2025**
(21) Application number: 23788297.2
(22) Date of filing: 10.04.2023
(51) Int. Cl.: D06M 13/17, D06M 13/224, D06M 15/53, D06M 101/40

(54) **TREATMENT AGENT FOR PRODUCTION OF CARBON FIBER SPUN YARN AND CARBON FIBER SPUN YARN**

(30) Priority: 15.04.2022 JP 2022067618
(71) Applicant: TAKEMOTO OIL & FAT CO., LTD., Aichi 443-8611 (JP)
(72) Inventor: MATSUNAGA Takuya, Gamagori-shi, Aichi 443-8611 (JP); OSHIMA Keiichiro, Gamagori-shi, Aichi 443-8611 (JP)
(74) Representative: Daub, Thomas
(86) International application number: PCT/JP2023/014489
(87) International publication number: WO 2023/199879

(57) **Abstract**

The present invention addresses the problem of suppressing the winding of carbon fiber slivers around the rollers of a drawframe. According to the present invention, a treatment agent for production of a carbon fiber spun yarn contains a (poly)oxyalkylene derivative (A). The number average molecular weight of the (poly)oxyalkylene derivative (A) is no more than 30000.

## Description

### TECHNICAL FIELD

The present invention relates to a treatment agent for producing carbon fiber spun yarn, and to a carbon fiber spun yarn.

### BACKGROUND ART

In general, carbon fiber fabrics composed of carbon fibers are known. Carbon fiber fabrics are used in composite materials in combination with, for example, matrix resins. Such composite materials are utilized in various fields such as medical equipment field, precision instruments and industrial machinery field, construction material field, energy field, transportation equipment field, aerospace field, and sports and leisure field.

Patent Document 1 describes that an oxidized fiber is first spun and then woven to produce an oxidized fabric. The oxidized fabric is carbonized to produce a carbon fiber fabric.

### CITATIONS LIST

### PATENT LITERATURE

Patent Document 1: Japanese Laid-Open Patent Publication No. 2006-274507

### SUMMARY OF INVENTION

### TECHNICAL PROBLEM

Conventionally, it has been challenging to directly spin carbon fibers to produce carbon fiber spun yarn. One of the reasons for this difficulty is that the carbon fiber sliver tends to wind around the rollers of a drawing frame, which reduces operability. Therefore, in conventional methods, as described in Patent Document 1, an oxidized fiber is spun to produce an oxidized fabric, and then the oxidized fabric is carbonized to produce a carbon fiber fabric. Producing a carbon fiber spun yarn by directly spinning carbon fibers is also a method for recycling carbon fibers. For this reason, active research is being conducted to develop methods for directly spinning carbon fibers into carbon fiber spun yarn.

### SOLUTION TO PROBLEM

In order to solve the above problem, one aspect of the present invention provides a treatment agent for producing carbon fiber spun yarn, which contains a (poly)oxyalkylene derivative (A). The (poly)oxyalkylene derivative (A) has a number average molecular weight of 30,000 or less.

The treatment agent for producing carbon fiber spun yarn preferably contains the (poly)oxyalkylene derivative (A) in an amount of 20% by mass or more and 60% by mass or less.

In the treatment agent for producing carbon fiber spun yarn, the number average molecular weight of the (poly)oxyalkylene derivative (A) is preferably 500 or more and 1,200 or less.

The treatment agent for producing carbon fiber spun yarn may further contain an ester compound (B). When the sum of the contents of the (poly)oxyalkylene derivative (A) and the ester compound (B) in the treatment agent is taken as 100% by mass, the treatment agent preferably contains the (poly)oxyalkylene derivative (A) in an amount of 30% by mass or more and 60% by mass or less and the ester compound (B) in an amount of 40% by mass or more and 70% by mass or less.

In order to solve the above problem, another aspect of the present invention provides a carbon fiber spun yarn to which the treatment agent for producing carbon fiber spun yarn is adhered.

### ADVANTAGEOUS EFFECTS OF INVENTION

According to the treatment agent for producing carbon fiber spun yarn of the present invention, the winding of the carbon fiber sliver around the rollers of a drawing frame can be suppressed.

### DESCRIPTION OF EMBODIMENTS

### <First embodiment>

A first embodiment of the treatment agent for producing carbon fiber spun yarn (hereinafter also referred to as the "treatment agent") according to the present invention will be described.

The treatment agent of the present embodiment contains a (poly)oxyalkylene derivative (A) and has a number average molecular weight of 30,000 or less.

When the treatment agent contains the (poly)oxyalkylene derivative (A), the winding of the carbon fiber sliver around the rollers of the drawing frame can be suppressed during the direct spinning of carbon fibers to produce carbon fiber spun yarn.

Hereinafter, each component constituting the treatment agent will be described.

### ((Poly)oxyalkylene derivative (A))

As the (poly)oxyalkylene derivative (A), a known (poly)oxyalkylene derivative (A) with a number average molecular weight of 30,000 or less can be used. Examples of the known (poly)oxyalkylene derivative (A) include compounds obtained by adding an alkylene oxide to an alcohol or carboxylic acid. Additionally, an ether ester compound obtained by adding an alkylene oxide to an ester compound of a carboxylic acid and a polyhydric alcohol can also be exemplified. The alcohol or carboxylic acid may be a linear or branched aliphatic alcohol or carboxylic acid, or an aromatic alcohol or carboxylic acid. The alcohol or carboxylic acid may also be saturated or unsaturated. Furthermore, the alcohol or carboxylic acid may be a mono-, di-, or higher hydric alcohol, or a mono-, di-, or higher carboxylic acid.

Specific examples of the (poly)oxyalkylene derivative (A) include an ethylene oxide adduct of butanol, an ethylene oxide adduct of glycerin, an ethylene oxide adduct of oleic acid, an ethylene oxide adduct of laurylamine, an ethylene oxide adduct of 3,5,5-trimethyl-1-hexanol, an ethylene oxide adduct of stearyl alcohol, an ethylene oxide adduct of lauric acid, an ethylene oxide adduct of diethylenetriamine dioleylamide, an ethylene oxide adduct of diethyleneamine monolaurylamide, an ethylene oxide adduct of sorbitan monooleate, an ethylene oxide adduct of hydrogenated castor oil, and an ethylene oxide-propylene oxide adduct of glycerin.

These (poly)oxyalkylene derivatives (A) may be used singly or in combination of two or more types.

Any compound that contains (poly)oxyalkylene is considered to be included in the (poly)oxyalkylene derivative (A), even if the compound contains an ester bond in its molecular skeleton.

The number average molecular weight of the (poly)oxyalkylene derivative (A) is preferably 500 or more and 1,200 or less.

When the number average molecular weight of the (poly)oxyalkylene derivative (A) is within the above range, the winding of the carbon fiber sliver around the rollers of the drawing frame can be suitably suppressed. Specifically, when the number average molecular weight of the (poly)oxyalkylene derivative (A) is 500 or more, the single yarns of carbon fiber are less likely to separate from each other, thereby suppressing the winding of the single yarns in the sliver around the rollers. When the number average molecular weight of the (poly)oxyalkylene derivative (A) is 1,200 or less, excessive tackiness on the surface of the sliver is reduced, which helps to prevent the entire sliver from winding around the rollers.

The method for measuring the number average molecular weight of the (poly)oxyalkylene derivative (A) is not particularly limited, and any known measurement method can be employed. The method for measuring the number average molecular weight will be described later.

The content of the (poly)oxyalkylene derivative (A) in the treatment agent is not particularly limited, but the treatment agent preferably contains the (poly)oxyalkylene derivative (A) in an amount of 20% by mass or more and 60% by mass or less.

When the content of the (poly)oxyalkylene derivative (A) in the treatment agent is within the above range, it is possible to prevent short fibers from falling off when the carbon fiber sliver is drawn using a drawing frame. Specifically, when the content of the (poly)oxyalkylene derivative (A) in the treatment agent is 20% by mass or more, the bundling property of the sliver is improved, making the single yarns in the sliver less likely to separate. As a result, the fall-off of the single yarns in the sliver can be suppressed. When the content of the (poly)oxyalkylene derivative (A) in the treatment agent is 60% by mass or less, excessive adhesion between the single yarns in the sliver is suppressed, thereby preventing the fall-off of the single yarns in lump form due to excessive adhesion.

The performance of preventing short fibers from falling off is referred to as the short fiber fall-off prevention property.

### (Ester compound (B))

The treatment agent preferably contains an ester compound (B).

The ester compound (B) is obtained by dehydration condensation of a compound having a carboxy group and a compound having a hydroxy group, and includes an ester bond in its molecular skeleton. Examples of the compound having a carboxy group include carboxylic acids. Examples of the compound having a hydroxy group include alcohols.

The carboxylic acid and alcohol may be monovalent or polyvalent. The carboxylic acid and alcohol may have a saturated hydrocarbon group or an unsaturated hydrocarbon group. The carboxylic acid and alcohol may be branched or linear. The ester compound (B) may be a complete ester compound, in which a carboxylic acid is bonded to all hydroxy groups of a polyhydric alcohol via ester bonds, or a partial ester compound, in which a carboxylic acid is bonded to some of the hydroxy groups of a polyhydric alcohol via ester bonds.

Specific examples of the ester compound (B) include an oleic acid ester of an alcohol with 12 or more and 13 or less carbon atoms, sorbitan monooleate, and hydrogenated castor oil.

These ester compounds (B) may be used singly or in combination of two or more types.

Even if a compound contains an ester bond, any compound that contains (poly)oxyalkylene is not considered to be included in the ester compound (B), but is instead considered to be included in the (poly)oxyalkylene derivative (A).

The contents of the (poly)oxyalkylene derivative (A) and the ester compound (B) in the treatment agent are not particularly limited. When the sum of the contents of the (poly)oxyalkylene derivative (A) and the ester compound (B) in the treatment agent is taken as 100% by mass, the treatment agent preferably contains the (poly)oxyalkylene derivative (A) in an amount of 30% by mass or more and 60% by mass or less. The treatment agent preferably contains the ester compound (B) in an amount of 40% by mass or more and 70% by mass or less.

When the contents of the (poly)oxyalkylene derivative (A) and the ester compound (B) are within the above range, the breakage of the sliver can be suitably suppressed when the sliver is drawn using a drawing frame. Specifically, when the content of the ester compound (B) is 40% by mass or more, the single yarns in the sliver become more easily slidable, which helps to suppress the breakage of the single yarns in lump form. When the content of the ester compound (B) is 70% by mass or less, the single yarns in the sliver are prevented from becoming excessively slippery. As a result, the fall-off of the single yarns from the sliver can be suppressed.

The performance of being able to draw the sliver while suppressing its breakage is referred to as the drafting property.

### (Other component (C))

The treatment agent may contain another component (C) in addition to the (poly)oxyalkylene derivative (A) and the ester compound (B). Examples of the other component (C) include commonly used components in treatment agents for quality maintenance of the treatment agents, such as stabilizers, antistatic agents, electrostatic prevention agents, binders, antioxidants, ultraviolet absorbers, antifoaming agents (silicone-based compounds), surfactants, and smoothing agents.

The treatment agent is formed of a nonvolatile component. The nonvolatile component refers to the absolute dry matter remaining after a volatile diluent and the like are sufficiently removed by heat treatment at 105°C for 2 hours. Therefore, water, an organic solvent, and the like are not included in the other component (C).

Specific examples of the other component (C) include mineral oil, used as a smoothing agent, with a kinematic viscosity at 40°C of 9.5 mm²/s.

The content of the other component (C) in the treatment agent is not particularly limited, but is preferably 80% by mass or less, more preferably 60% by mass or less, still more preferably 30% by mass or less, and most preferably 10% by mass or less.

### <Second embodiment>

A second embodiment of the carbon fiber spun yarn according to the present invention will be described. The carbon fiber spun yarn of the present embodiment has the treatment agent of the first embodiment adhered thereto. The amount of the treatment agent (excluding solvent) of the first embodiment adhered to the carbon fiber spun yarn is not particularly limited. However, from the viewpoint of further improving the effects of the present invention, it is preferable that the treatment agent adheres to the carbon fiber spun yarn in an amount of 0.1% by mass or more and 10% by mass or less.

The carbon fibers forming the carbon fiber spun yarn are not particularly limited, and examples thereof include PAN-based carbon fibers obtained from acrylic fibers as a raw material, pitch-based carbon fibers obtained from pitch as a raw material, recycled carbon fibers, and carbon fibers obtained using polyester fibers, polyethylene resin, phenol resin, cellulose resin, lignin resin, and the like as raw materials.

The length of the carbon fibers is not particularly limited. The carbon fibers may be short fibers with a length of 1 cm or less, which are also referred to as shortcuts, or short fibers with a length of about 3 cm or more and 7 cm or less, which are also referred to as staples. The carbon fibers may also be long fibers with a length of 10 cm or more, which are also called filaments. When the carbon fibers are recycled from a carbon fiber fabric used in composite materials, the carbon fibers include many short fibers.

A method for producing a carbon fiber spun yarn of the present embodiment includes: an applying step, in which the treatment agent of the first embodiment is applied to carbon fibers; and a carding step, in which the fiber directions of the carbon fibers subjected to the applying step are aligned to form a sliver in the form of a string. The method further includes a drawing step, in which several slivers are drawn together. The drawing step is performed by drawing and combining several slivers into one while conveying the slivers through the rollers of a drawing frame. The method also includes a roving step, in which the sliver subjected to the drawing step is drawn and wound into a roving; a ring spinning step, in which the roving is further drawn and the fine-spun yarn is wound; and a winding step, in which the fine-spun yarn is wound into a package while adjusting its quality. By sequentially carrying out these steps, a carbon fiber spun yarn can be produced.

In the applying step, the carbon fibers are lubricated with the treatment agent of the first embodiment, thereby adhering the treatment agent to the carbon fibers. As a lubrication method, for example, a known method can be applied using an aqueous liquid containing the treatment agent of the first embodiment and water, or an aqueous solution prepared by further diluting the aqueous liquid. Examples of the known lubrication method include an immersion method, a spraying method, a roller method, and a guide lubrication method using a metering pump.

A known mechanical emulsification method using a homomixer, a homogenizer, or the like can be applied to the preparation of the aqueous liquid.

The timing of performing the applying step is not particularly limited, as long as it is before the drawing step.

The usage of the carbon fiber spun yarn is not particularly limited. For example, it can be used to produce a carbon fiber fabric for composite materials together with a matrix resin. The carbon fiber spun yarn can also be used for a gas diffusion electrode in fuel cells.

### <Operation and effect>

According to the treatment agent of the first embodiment and the carbon fiber spun yarn of the second embodiment, the following operation and effects can be obtained.
(1) The treatment agent contains a (poly)oxyalkylene derivative (A) with a number average molecular weight of 30,000 or less. Therefore, when carbon fibers are directly spun to produce a carbon fiber spun yarn, the winding of the carbon fiber sliver around the rollers of the drawing frame can be suppressed. There is no need to stop the operation to remove slivers wound around the rollers of the drawing frame. As a result, carbon fiber spun yarn can be produced by directly spinning carbon fibers without deteriorating operability.
(2) The treatment agent contains the (poly)oxyalkylene derivative (A) in an amount of 20% by mass or more and 60% by mass or less. As a result, when the carbon fiber sliver is drawn using the drawing frame, it is possible to suitably prevent short fibers from falling off. In other words, the short fiber fall-off prevention property of the carbon fibers can be improved.
(3) The number average molecular weight of the (poly)oxyalkylene derivative (A) is 500 or more and 1,200 or less. As a result, it is possible to suitably suppress the winding of the carbon fiber sliver around the rollers of the drawing frame.
(4) The treatment agent contains an ester compound (B), and when the sum of the contents of the (poly)oxyalkylene derivative (A) and the ester compound (B) in the treatment agent is taken as 100% by mass, the treatment agent contains the (poly)oxyalkylene derivative (A) in an amount of 30% by mass or more and 60% by mass or less. The treatment agent contains the ester compound (B) in an amount of 40% by mass or more and 70% by mass or less. As a result, when the sliver is drawn in the drawing frame, the breakage of the sliver can be suitably suppressed. In other words, the drafting property can be improved.
(5) The carbon fiber spun yarn is produced by directly spinning carbon fibers. Therefore, a carbon fiber fabric can be easily produced simply by weaving the carbon fiber spun yarn. In the prior art, a carbon fiber fabric is produced by carbonizing an oxidized fabric made from oxidized fibers, which results in a relatively large dimensional change during carbonization. In contrast, with the carbon fiber spun yarn of the present invention, the carbon fiber fabric can be produced without carbonization, resulting in relatively small dimensional changes. Consequently, the dimensional accuracy of the carbon fiber fabric can be improved.
(6) Recycled carbon fibers can be used as a raw material for the carbon fiber spun yarn. This allows for the effective utilization of resources, and at the same time, eliminates the need to carbonize synthetic fibers to produce carbon fibers, which can contribute to cost reduction.

### EXAMPLES

Examples are provided below to more specifically illustrate the features and effects of the present invention; however, the invention is not limited to these examples. In the following descriptions of the examples and comparative examples, % refers to % by mass.

### Experimental Part 1 (Preparation of treatment agent)

### (Example 1)

The (poly)oxyalkylene derivative (A-1) and the ester compound (B-1) listed in Table 1 were weighed to be 60% by mass and 40% by mass, respectively, and then added to a container. These were stirred at a temperature of about 80°C and uniformly mixed to prepare a treatment agent. Further, water at 20°C was added to the container, and the mixture was stirred and uniformly mixed. Thereafter, the resulting mixture was emulsified using a homogenizer to prepare a 20% aqueous liquid of the treatment agent.

### (Examples 2 to 33 and Comparative Examples 1 to 3)

The treatment agents of Examples 2 to 33 and Comparative Examples 1 to 3 were prepared in the same manner as in Example 1, using the components listed in Table 1.

The (poly)oxyalkylene derivative (A) and the ester compound (B) in the treatment agent of each example are as shown in the columns "(poly)oxyalkylene derivative (A)" and "ester compound (B)" in Table 1, respectively. The types and contents of the other component (C) are as shown in the column "other component (C)" in Table 1.

When the sum of the contents of the (poly)oxyalkylene derivative (A) and the ester compound (B) in the treatment agent is taken as 100% by mass, the content of the (poly)oxyalkylene derivative (A) is shown in the column "(A)/((A) + (B))".

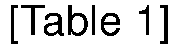

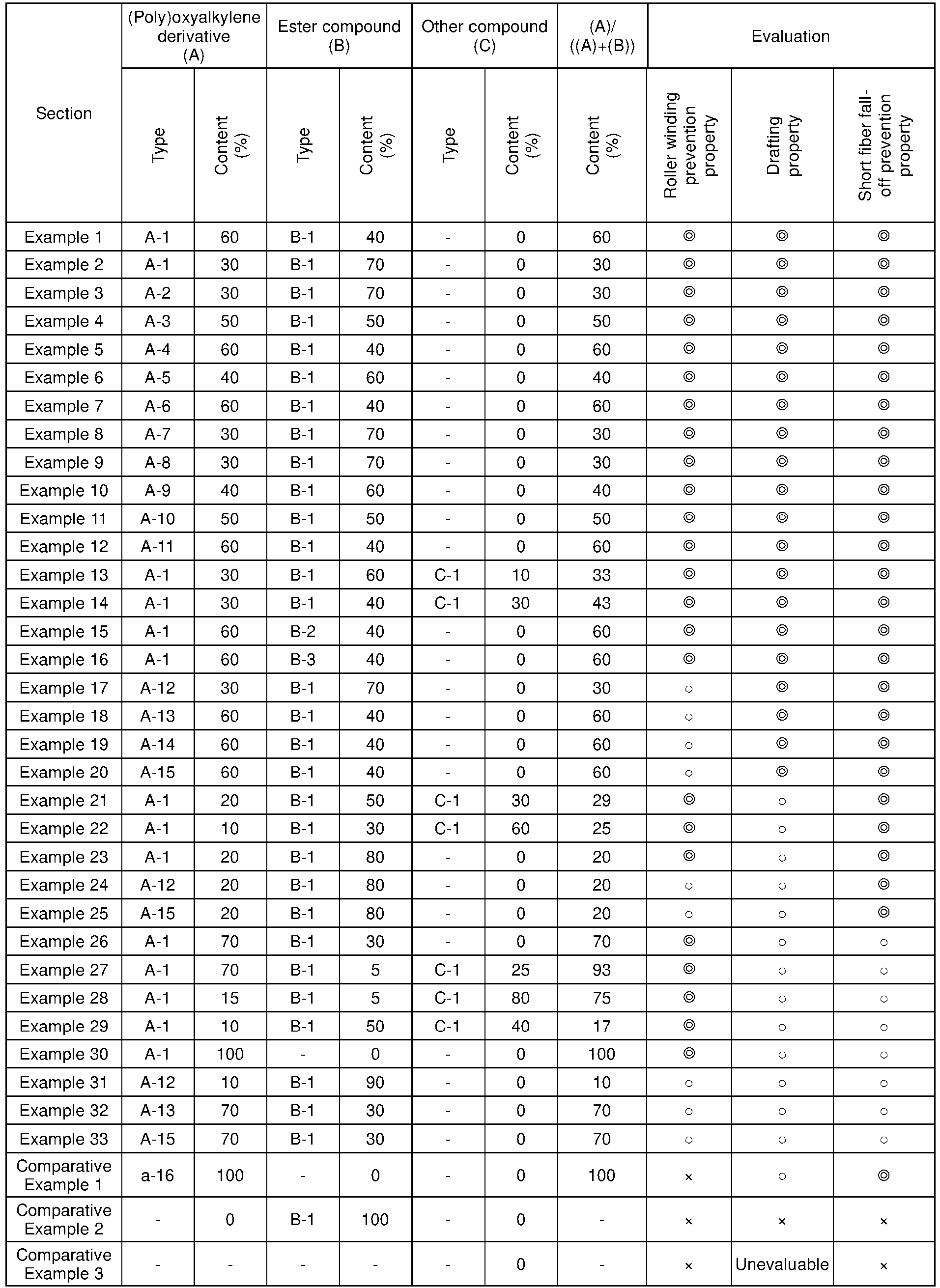

The details of the components of A-1 to A-15, α-16, B-1 to B-3, and C-1 listed in the column "type" in Table 1 are as follows.

### ((Poly)oxyalkylene derivative (A))

The type and number average molecular weight of the (poly)oxyalkylene derivative (A) are shown in the columns "compound name" and "number average molecular weight" in Table 2, respectively.

**[Table 2]**

| Type | Compound name | Number average molecular weight |
|---|---|---|
| A-1 | Ethylene oxide adduct of butanol | 1178 |
| A-2 | Ethylene oxide adduct of glycerin | 972 |
| A-3 | Ethylene oxide adduct of oleic acid | 895 |
| A-4 | Ethylene oxide adduct of laurylamine | 1065 |
| A-5 | Ethylene oxide adduct of 3,5,5-trimethyl-1-hexanol | 738 |
| A-6 | Ethylene oxide adduct of stearyl alcohol | 787 |
| A-7 | Ethylene oxide adduct of lauric acid | 1132 |
| A-8 | Ethylene oxide adduct of diethylenetriamine dioleylamide | 1158 |
| A-9 | Ethylene oxide adduct of diethyleneamine monolaurylamide | 1015 |
| A-10 | Ethylene oxide adduct of sorbitan monooleate | 1000 |
| A-11 | Ethylene oxide adduct of hydrogenated castor oil | 1196 |
| A-12 | Ethylene oxide adduct of butanol | 3800 |
| A-13 | Ethylene oxide adduct of butanol | 2300 |
| A-14 | Ethylene oxide adduct of butanol | 474 |
| A-15 | Ethylene oxide-propylene oxide adduct of glycerin | 24192 |
| a-16 | Ethylene oxide-propylene oxide adduct of glycerin | 39492 |

The number average molecular weight (Mn) of the (poly)oxyalkylene derivative (A) was measured under the following conditions based on the GPC method.
Apparatus: HLC-8320GPC, manufactured by Tosoh Corporation
Column:
   TSK gel Super H4000
   : TSK gel Super H3000
   : TSK gel Super H2000 (all manufactured by Tosoh Corporation)
Column temperature: 40°C
Detector: Differential refractive index detector
Sample solution: 0.25% by mass tetrahydrofuran solution
Solution flow rate: 0.5 mL/min
Solution injection amount: 10 µL
Standard sample: Polystyrene (TSK STANDARD POLYSTYRENE, manufactured by Tosoh Corporation)

A calibration curve was prepared using the standard sample to determine the number average molecular weight (Mn) of the (poly)oxyalkylene derivative (A).

### (Ester compound (B))

B-1: Oleic acid ester of an alcohol with 12 or more and 13 or less carbon atoms
B-2: Sorbitan monooleate
B-3: Hydrogenated castor oil

### (Other component (C))

C-1: Mineral oil with a kinematic viscosity at 40°C of 9.5 mm²/s

### Experimental Part 2 (Production of carbon fiber spun yarn)

A carbon fiber spun yarn was produced using the treatment agent prepared in Experimental Part 1.

As the carbon fibers, short fibers (staples) with an average length of 50 mm, recycled from a composite material, were used.

In the applying step, the 20% aqueous solution of the treatment agent prepared in Experimental Part 1 was further diluted to prepare a 0.4% aqueous solution. This aqueous solution was adhered to the carbon fibers using a spraying method. The amount of solid content of the treatment agent adhered to the staple was set to 0.4% by mass (excluding the solvent). The carbon fibers with the adhered treatment agent were dried in a hot air dryer at 80°C for 1 hour.

Next, the carbon fibers subjected to the applying step underwent the following processes in this order: carding, drawing, roving, ring spinning, and winding, resulting in the production of carbon fiber spun yarn. In the drawing step, two slivers were combined and drawn 3.9 times using a drawing frame.

### Experimental Part 3 (Evaluation)

For the treatment agents described in Examples 1 to 33 and Comparative Examples 1 to 3, the roller winding prevention property, drafting property, and short fiber fall-off prevention property were evaluated as indicators of processability during the production of carbon fiber spun yarn. The procedure for each test is described below. The evaluation results for each test are shown in the columns "roller winding prevention property," "drafting property," and "short fiber fall-off prevention property" in Table 1.

### (Roller winding prevention property)

In the drawing step of Experimental Part 2, the presence or absence of sliver winding around the rollers of the drawing frame was visually observed. The time from the start of drawing until the sliver wound around the rollers of the drawing frame was measured, and the roller winding prevention property was then evaluated according to the following criteria. The sliver winding encompasses both cases where the entire sliver winds around the rollers and cases where single yarns in the sliver wind around the rollers.

### · Evaluation criteria for roller winding prevention property

⊚ (Good): The sliver does not wind around the roller after 10 minutes from the start of drawing.
o (Acceptable): The sliver winds around the roller within 10 minutes but after more than 5 minutes.
× (Unacceptable): The sliver winds around the roller within 5 minutes.

### (Drafting property)

A tensile strength test was performed using the sliver produced in the carding step of Experimental Part 2. The conditions for the tensile strength test were as follows: the sliver's gripping length was 10 cm, and the sliver was drawn for 1 minute at a tensile speed of 10 cm/min. The time until the tow forming the sliver broke was measured, and the drafting property was evaluated according to the following criteria. The breakage of the tow forming the sliver **encompasses** both cases where the single yarns in the sliver break together in lump form and cases where the single yarns in the sliver fall off.

### · Evaluation criteria for drafting property

⊚ (Good): The tow does not break during the 1-minute drawing.
o (Acceptable): The time until the tow breaks is 50 seconds or more and less than 1 minute.
× (Unacceptable): The time until the tow breaks is less than 50 seconds.

### (Short fiber fall-off prevention property)

In the drawing step of Experimental Part 2, after 10 minutes had passed from the start of drawing, the presence or absence of short fiber fall-off in the drawing frame was visually observed. As a comparative test, the carbon fibers used in Experimental Part 2 were also used, but the drawing step was performed without applying the treatment agent by omitting the applying step. The presence or absence of short fiber fall-off was visually observed after 10 minutes from the start of drawing, and the short fiber fall-off prevention property was evaluated according to the following criteria. The fall-off of short fibers encompasses both cases where the single yarns in the sliver separate and fall off and cases where the single yarns fall off in lump form.

### · Evaluation criteria for short fiber fall-off prevention property

⊚ (Good): No short fibers fall off at all.
o (Acceptable): A small amount of short fibers fall off, but the amount is less than in the comparative test.
× (Unacceptable): A large amount of short fibers fall off, and the amount is equal to or greater than in the comparative test.

From Table 1, in the treatment agent of Comparative Example 1, in which the number average molecular weight of the (poly)oxyalkylene derivative (A) exceeded 30,000, the roller winding prevention property was unacceptable.

In the treatment agent of Comparative Example 2, which did not contain the (poly)oxyalkylene derivative (A) and had an ester compound (B) content of 100% by mass, all of the roller winding prevention property, drafting property, and short fiber fall-off prevention property were all unacceptable.

In Comparative Example 3, in which the treatment agent itself was not used at all, both the roller winding prevention property and the short fiber fall-off prevention property were unacceptable. Since the tow was very prone to breakage, the drafting property could not be evaluated.

In contrast, the treatment agents of Examples 1 to 33 were either acceptable or good in all of the roller winding prevention property, drafting property, and short fiber fall-off prevention property.

According to the treatment agent of the present invention, the winding of the carbon fiber sliver around the rollers of the drawing frame can be suppressed. Furthermore, when the sliver is drawn in the drawing frame, it is possible to suppress sliver breakage and prevent short fibers from falling off.

## Claims

1. A treatment agent for producing carbon fiber spun yarn, comprising a (poly)oxyalkylene derivative (A), wherein the (poly)oxyalkylene derivative (A) has a number average molecular weight of 30,000 or less.

2. The treatment agent for producing carbon fiber spun yarn according to claim 1, wherein the treatment agent for producing carbon fiber spun yarn contains the (poly)oxyalkylene derivative (A) in an amount of 20% by mass or more and 60% by mass or less.

3. The treatment agent for producing carbon fiber spun yarn according to claim 1, wherein the number average molecular weight of the (poly)oxyalkylene derivative (A) is 500 or more and 1,200 or less.

4. The treatment agent for producing carbon fiber spun yarn according to claim 1, further comprising an ester compound (B), wherein
when the sum of the contents of the (poly)oxyalkylene derivative (A) and the ester compound (B) in the treatment agent is taken as 100% by mass, the treatment agent contains the (poly)oxyalkylene derivative (A) in an amount of 30% by mass or more and 60% by mass or less and the ester compound (B) in an amount of 40% by mass or more and 70% by mass or less.

5. A carbon fiber spun yarn to which the treatment agent for producing carbon fiber spun yarn according to any one of claims 1 to 4 is adhered.
